# EUROPÄISCHE PATENTSCHRIFT

(11) **EP 0 857 258 B1**
(45) Veröffentlichungstag und Bekanntmachung des Hinweises auf die Patenterteilung: **08.08.2001**
(21) Anmeldenummer: 96945970.0
(22) Anmeldetag: 16.10.1996
(51) Int. Cl.: F16L 27/08, F16L 27/11

(54) **VORRICHTUNG ZUM ANKUPPELN DER KÜHLMEDIENFÜHRUNG EINES ROTATIONSTEILES**
DEVICE FOR COUPLING COOLANT DUCT OF A ROTATING PART
DISPOSITIF POUR RACCORDER LA CONDUITE DE REFROIDISSEMENT D'UNE PIECE TOURNANTE

(30) Priorität: 27.10.1995 DE 19541131
(43) Veröffentlichungstag der Anmeldung: 12.08.1998
(73) Patentinhaber: Mannesmannröhren-Werke AG, 45473 Mülheim a.d. Ruhr (DE)
(72) Erfinder: GOHRES, Hans-Werner, D-47239 Duisburg (DE); DIVJAK, Franz-Josef, D-47495 Rheinberg (DE); LENK, Rainer, D-47055 Duisburg (DE)
(74) Vertreter: Meissner, Peter E., Dipl.-Ing.
(86) Internationale Anmeldenummer: DE9602026
(87) Internationale Veröffentlichungsnummer: WO9715763

(56) Entgegenhaltungen:
- DE-A- 4 227 987
- DE-C- 4 207 042
- US-A- 2 789 843

## Beschreibung

Die Erfindung betrifft ein Rotationsteil, insbesondere eine Stütz- und Transportwalze, mit einer Vorrichtung zum Ankuppeln einer Kühlmedienführung gemäß dem Oberbegriff des Patentanspruchs 1.

Aus der DE-PS 42 07 042 ist ein gattungsmäßiges Rotationsteil, mit einer Vorrichtung zum Ankuppeln der Kühlmedienführung bekannt. Diese Vorrichtung ist über Zapfen in Lagerböcken durch Wälzlager gelagert und wird über eine axiale durch die Zapfen geführte Bohrung von einem Kühlmedium durchströmt. Jeder Lagerbock ist durch einen Deckel verschlossen und der Deckel weist einen Kühlkanal auf, der einends an eine Kühlmittelzu-bzw. abfuhr angeschlossen ist und anderenends im Bereich der Zapfenbohrung mündet. Zwischen der Kanalmündung des Deckels und der Bohrung der Walze ist ein Kompensator vorgesehen, der mit einer Dichtung zusammenwirkt, die koaxial eine zur Walzenachse angeordnete Dichtfläche berührt. Vorzugsweise ist die Dichtung als Lippendichtung ausgebildet.

Nachteilig bei dieser Konstruktion ist, daß die Dichtlippe des Dichtringes durch die Bewegung, die auf ihr stattfindet, verschleißbehaftet und deshalb in ihrer Lebensdauer begrenzt ist. Weiterhin ist der abdeckbare Temperaturbereich begrenzt, da Lippendichtringe üblicherweise aus Elastomeren hergestellt sind. Außerdem kann der Kompensator nicht gezielt vorgespannt werden, so daß eine Anpassung an verschiedene Innendrücke des Kühlmediums nicht möglich ist.

Aufgabe der Erfindung ist es, eine langlebige Vorrichtung der gattungsmäßigen Art zu schaffen, mit der die geschilderten Nachteile vermeidbar sind.

Diese Aufgabe wird mit den im kennzeichnenden Teil des Anspruches 1 angegebenen Merkmalen gelöst. Vorteilhafte Weiterbildungen sind Bestandteil von Unteransprüchen.

Der Vorteil der vorgeschlagenen Konstruktion ist darin zu sehen, daß durch Verwendung einer axial wirkenden Gleitringdichtung der Einsatzbereich erheblich vergrößert werden kann. Die bisher übliche Temperaturbegrenzung infolge der Verwendung eines Elastomers für die Lippendichtung entfällt hier. Die Standzeit der Vorrichtung wird signifikant verlängert, da die Verschleißrate einer Gleitringdichtung erheblich unter der einer Lippendichtung liegt. Der für die Gleitringdichtung verwendete harte und verschleißfeste Werkstoff wie z. B. Siliziumkarbid ist in der Lage, die möglicherweise mit dem Kühlmedium mitgeschleppten Schmutzteilchen zu zermahlen. Die Anordnung des Kompensator zusammen mit der Gleitringdichtung in einer Aufnahmehülse ermöglicht es, die Vorspannung über die Variation des Abstandes des deckelartigen Flansches zum Rahmenelement der Lagerung des Rotationsteiles vorzunehmen. Diese Variation der Vorspannung kann vorteilhaft eingesetzt werden, um die Wirkung des Innendruckes des Kühlmediums an die Wirkung des Kompensators anzupassen..

Die vorgeschlagene Vorrichtung ist sowohl für schnell- als auch langsamlaufende Walzen, Rollen oder dergleichen einsetzbar, da über die Wahl des Werkstoffes als auch über die Größe der Dichtfläche der Gleitringdichtung die entsprechende Anpassung möglich ist. Mögliche Leckagen des Kühlmediums im Bereich der Gleitringdichtung können problemlos durch eine beispielsweise im deckelartigen Flansch angebrachte Öffnung abgeführt werden. Dadurch wird verhindert, daß das Kühlmedium in unerwünschter Weise sich mit dem Schmiermittel für die Lagerung vermischen kann. In vielen Fällen ist auch der kontrollierte Austritt des Kühlmediums an definierter Stelle nach einem Schaden an der Dichtung erwünscht, um das in der Anlage hergestellte Produkt nicht zu benetzen.

Die neu entwickelte Konstruktion ist auch für Rotationsteile einsetzbar, bei denen eine Seite beispielsweise durch den Anschluß einer Antriebseinheit nicht für einen Kühlanschluß zur Verfügung steht. In diesem Falle wird das Duo-Prinzip angewandt, bei dem von einer Seite her sowohl die Zu- als auch die Abfuhr des ausgewählten Kühlmediums erfolgt. Dazu wird in der Bohrung des Rotationsteiles ein Rohr angeordnet, dessen äußerer Durchmesser geringer ist als der Innendurchmesser der Bohrung. Dieses Rohr erstreckt sich durch den Kompensator und die Gleitringdichtung und ist mit einem in der Aufnahmehülse angeordneten Zuführ- bzw. Abführanschluß verbunden.

In der Zeichnung wird anhand mehrerer Ausführungsbeispiele die erfindungsgemäße Vorrichtung näher erläutert.

Es zeigen:
- Figur 1: einen Teillängsschnitt durch eine erste Ausführungsform der erfindungsgemäßen Vorrichtung
- Figur 2: eine Ansicht in Richtung X in Figur 1
- Figur 3: eine zweite Ausführungsform im vergleichbaren Längsschnitt wie Fig.1
- Figur 4: eine Ansicht in Richtung Y in Fig. 3
- Figur 5: eine dritte Ausführungsform im vergleichbaren Längsschnitt wie Fig. 1
- Figur 6: eine vierte Ausführungsform im vergleichbaren Längsschnitt wie Fig. 2.

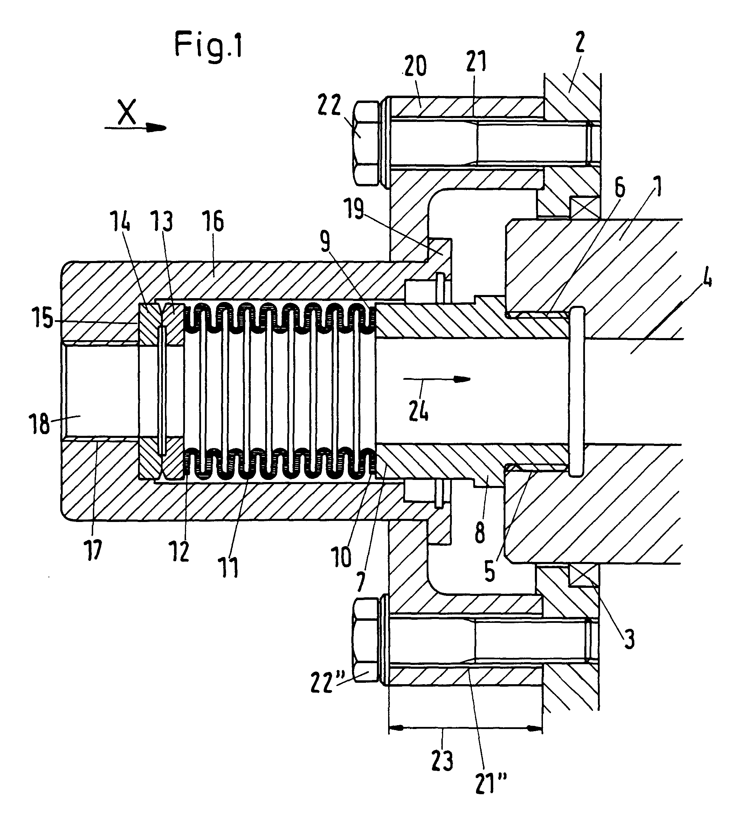

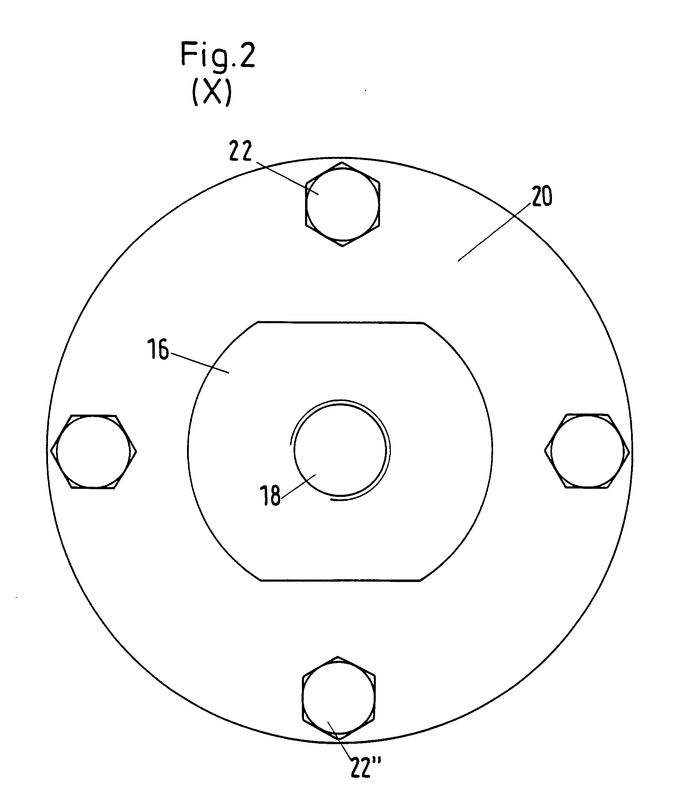

Figur 1 zeigt in einem Teillängsschnitt und Figur 2 eine Ansicht in Richtung X von Figur 1 eine erste Ausführungsform der erfindungsgemäßen Vorrichtung. Der Endbereich eines Zapfens 1 eines nicht näher dargestellten Rotationsteiles ist von einem Rahmenteil 2 der nicht näher dargestellten Lagerung mittels einer Dichtung 3 abgedeckt. Der Zapfen 1 weist eine axial sich erstreckende Bohrung 4 auf, durch die das Kühlmedium geführt wird. Im Endbereich des Zapfens 1 ist mittig eine Ausnehmung 5 angeordnet, in die hier beispielsweise eine einen Gewindeabschnitt 6 aufweisende Bundhülse 7 eingeschraubt ist. Für den Anschlag weist die Bundhülse 7 einen bundförmigen Kragen 8 auf. Dieser bundartige Kragen 8 ist vorzugsweise mit zwei Abflachungen (hier nicht dargestellt) versehen, so daß ein entsprechender Maulschlüssel zum Festschrauben der Bundhülse 7 angesetzt werden kann bzw. auch eine Anflanschung möglich ist. Am stimseitigen Ende 9 der Bundhülse 7 ist drehfest das dem Rahmenteil 2 zugewandte Ende 10 eines Kompensators 11 befestigt, beispielsweise mittels einer Schweißnaht. Das gegenüberliegende Ende 12 des Kompensators 11 ist drehfest mit einem Gleitring 13 einer Gleitringdichtung verbunden, beispielsweise ebenfalls mittels einer Schweißnaht. Der feststehende Gleitring 14 der Gleitringdichtung ist auf einem bodenähnlichen Absatz 15 einer Aufnahmehülse 16 drehfest angeordnet, beispielsweise mittels einer Einpressung. Vorzugsweise bestehen die Gleitringe 13,14 der Gleitringdichtung aus Siliziumkarbid und sind damit hart und verschleißfest. In diesem Ausführungsbeispiel weist die Aufnahmehülse 16 eine mit einem Gewindeabschnitt 17 versehene Bohrung 18 auf. In diesem Gewindeabschnitt 17 kann eine entsprechende Kühlmittelleitung eingeschraubt werden. Selbstverständlich kann dieser Anschluß konstruktiv auch anders gestaltet sein, ohne daß der Kern der Erfindung in irgendeiner Weise davon betroffen ist. An dem dem Rotationsteil zugewandten Ende weist die Aufnahmehülse 16 einen radial nach außen sich erstreckenden Kragen 19 auf. An diesen Kragen 19 kommt ein Deckel 20 zur Anlage. Der Deckel 20 weist in diesem Ausführungsbeispiel vier Bohrungen 21,21',21",21"' auf, durch die Verbindungsschrauben 22,22',22",22"' steckbar sind. Mittels dieser Schrauben 22 bis 22"' wird der Deckel 20 am Rahmenteil 2 befestigt. Je geringer die Dicke 23 des Deckels 20 gewählt wird, um so höher ist die Vorspannung des durch die Aufnahmehülse 16 umfaßten Kompensators 11. Durch Anordnung von hier nicht dargestellten Distanzscheiben zwischen Deckel 20 und Rahmenteil 2 kann die Vorspannung erniedrigt werden. In diesem Ausführungsbeispiel soll beispielsweise das Kühlmedium von links nach rechts die Vorrichtung durchströmen, hier gekennzeichnet durch einen Pfeil 24. Das Kühlmedium durchfließt auch den Kompensator 11, der durch den Innendruck des Kühlmediums beaufschlagt wird. Die aufgegebene Vorspannung des Kompensators 11 und der Innendruck des Kühlmediums wirken in der Weise zusammen, daß die für die Dichtwirkung notwendige Kraft erzielt wird.

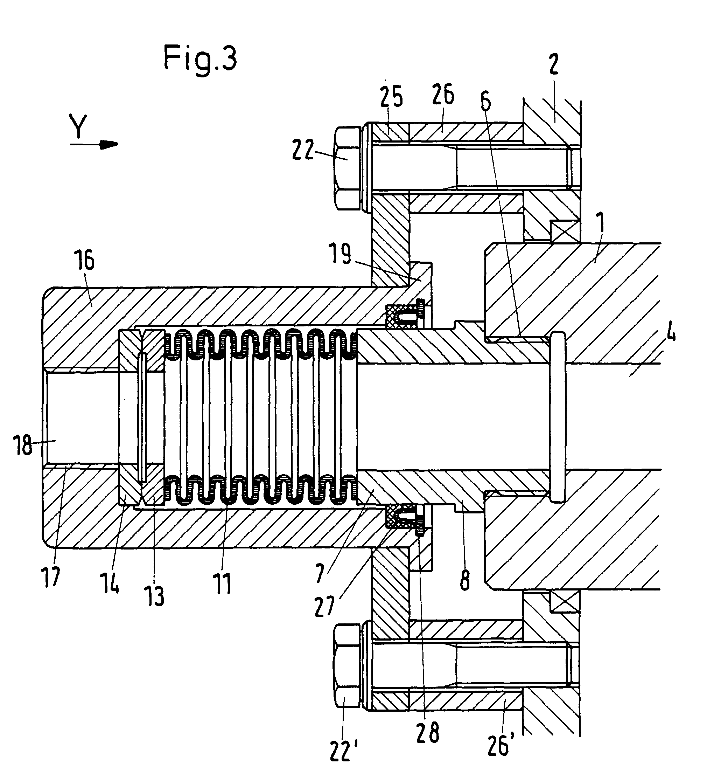

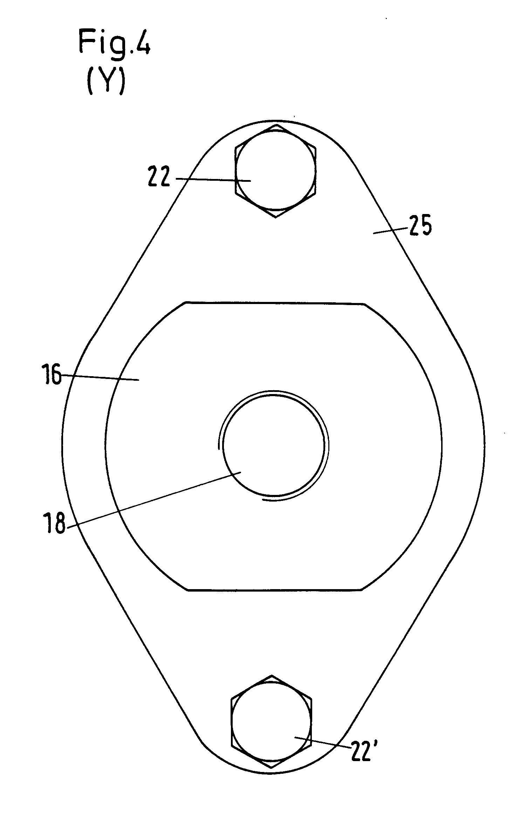

Figur 3 und 4 zeigen eine zweite Ausführungsform der erfindungsgemäßen Vorrichtung im gleichen Teillängsschnitt und Ansicht wie Figur 1 bzw. Figur 2, wobei für gleiche Teile gleiche Bezugszeichen verwendet worden sind. Im Unterschied zu Figur 1 wird hier statt eines Deckels eine brillenartige Scheibe 25 verwendet, die mit der Aufnahmehülse 16 zusammenwirkt. Der die Vorspannung des Kompensators 11 beeinflußende Abstand wird in diesem Beispiel über die die Verbindungsschrauben 22,22' umfassenden Distanzhülsen 26,26' eingestellt. Da in diesem Fall der Raum zwischen Scheibe und Zapfen 1 offen ist, ist zwischen der Bundhülse 8 und der Aufnahmehülse 16 eine Dichtung 27, gesichert durch einen Sprengring 28, angeordnet. Falls eine Drainageöffnung erforderlich ist, müßte sie in diesem Falle in dem zylindrischen Teil der Aufnahmehülse 16 angeordnet werden.

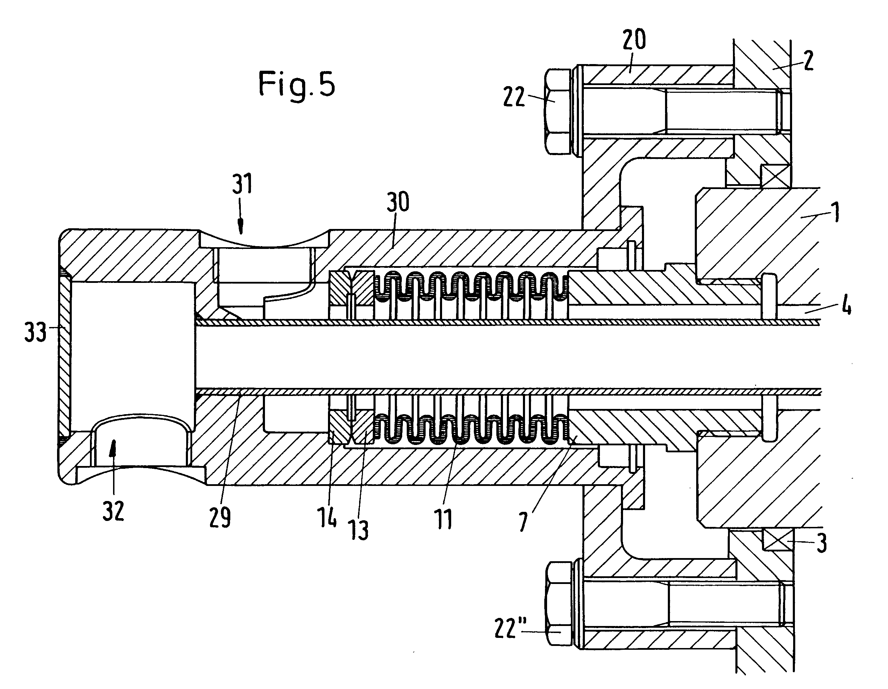

Figur 5 zeigt ein weiteres Ausführungsbeispiel im gleichen Teillängsschnitt wie Figur 1. Auch hier sind gleiche Teile mit gleichen Bezugszeichen versehen. Diese Ausführungsform ist erforderlich, falls die andere Seite des hier nicht näher dargestellten Rotationsteiles für einen Kühlmittelanschluß nicht zur Verfügung steht, weil beispielsweise an dieser Seite der Antrieb für die Drehung des Rotationsteiles befestigt ist. In diesem Falle ist in der Bohrung 4 des Zapfens 1 ein Rohr 29 angeordnet, das einen geringeren äußeren Durchmesser aufweist als der Innendurchmesser der Bohrung 4 des Zapfens 1. Dieses Rohr 29 erstreckt sich durch die Bundhülse 7, den Kompensator 11 und die Gleitringdichtung und ist in einer anders gestalteten Aufnahmehülse 30 befestigt. Diese Aufnahmehülse 30 unterscheidet sich von der in Figur 1 dargestellten, daß sie einen Zuführungsanschluß 31 und einen Abfuhranschluß 32 aufweist. Die beiden Anschlüsse 31,32 können in ihrer Funktion auch vertauscht werden. Das offene Ende der Aufnahmehülse 30 ist mit einem Deckel 33 verschlossen. Die Wirkung der Gleitringdichtung im Verbund mit dem Kompensator 11 ist die gleiche wie zuvor beschrieben.

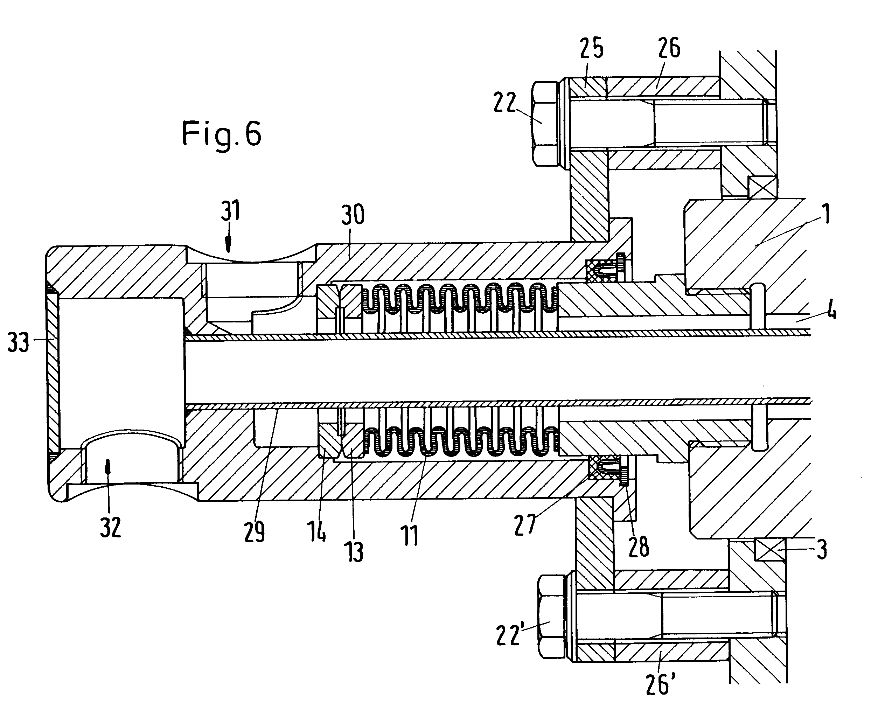

Figur 6 zeigt eine zweite Variante, wobei sie das Gegenstück zu Figur 3 in bezug auf Figur 1 ist. Auch in diesem Ausführungsbeispiel ist der Deckel 20 durch eine brillenartige Scheibe 25 und damit zusammenwirkende Distanzhülsen 26,26' b ersetzt.

## Patentansprüche

1. Rotationsteil, insbesondere Stütz- und Transportwalze, mit einer Vorrichtung zum Ankuppeln einer Kühlmedienführung, wobei das Rotationsteil über Zapfen in Lagern gelagert ist und über eine axial durch die Zapfen geführte Bohrung von einem Kühlmedium durchströmt wird, wobei der Zapfen mit einem Kühlkanal verbunden ist, der einends an eine Kühlmittelzu- bzw. -abfuhr anschließbar ist und anderenends im Bereich der Zapfenbohrung mündet und zwischen Zu- bzw. Abfuhrbereich des Kühlmediums und der Bohrung des Rotationsteiles ein Kompensator vorgesehen ist, der elastisch ist und Bewegungen zwischen dem Zapfen und den feststehenden Vorrichtungsteilen verhindert und der mit einer in diesem Zwischenbereich angeordneten Dichtung zusammenwirkt und dessen dem Rotationsteil zugewandte Ende drehfest mit dem Zapfen des Rotationsteiles verbunden ist,
dadurch gekennzeichnet,
daß das dem Rotationsteil (1) abgewandte Ende (12) des Kompensators (11) mit einem axial wirkenden Gleitring (13) einer Gleitringdichtung drehfest verbunden ist und der feststehende Gleitring (14) der Gleitringdichtung sich auf einem bodenähnlichen Vorsprung einer Aufnahmehülse (16) innenseitig abstützt, die den Kompensator (11) umfassend und dessen Vorspannung beeinflussend in einem veränderbaren Abstand (21) mit einem Rahmenelement (2) der Lagerung des Rotationsteiles (1) lösbar verbunden ist.

2. Rotationsteil Anspruch 1,
dadurch gekennzeichnet,
daß die Aufnahmehülse (16) auf der dem Rotationsteil (1) zugewandten Ende einen radial nach außen sich erstreckenden Kragen (19) aufweist, der mit einem deckelartigen Flansch (20) zusammenwirkt, der wiederum über mindestens zwei Schrauben (22,22') mit dem Rahmenelement (2) der Lagerung des Rotationsteiles (1) verbunden ist.

3. Rotationsteil nach Anspruch 2,
dadurch gekennzeichnet,
daß der deckelartige Flansch eine brillenartige Scheibe (25) aufweist, die mit die Verbindungsschrauben (22,22') umfassenden Distanzhülsen (26,26') zusammenwirkt.

4. Rotationsteil nach den Ansprüchen 1 bis 3,
dadurch gekennzeichnet,
daß die Vorspannung des Kompensators (11) über Distanzringe und verschieden lange Distanzhülsen (26,26') einstellbar ist.

5. Rotationsteil nach einem der Ansprüche 1 bis 4,
dadurch gekennzeichnet,
daß das dem Rotationsteil (1) zugewandte Ende (10) des Kompensators (11) drehfest mit einer sich bis in die Aufnahmehülse (16) erstreckende Bundhülse (7) verbunden ist, die wiederum drehfest mit dem Zapfen des Rotationsteiles (1) verbunden ist.

6. Rotationsteil nach einem der Ansprüche 1 bis 5,
dadurch gekennzeichnet,
daß die Gleitringe (13,14) der Gleitringdichtung aus einem harten und verschleißfesten Werkstoff hergestellt sind.

7. Rotationsteil nach Anspruch 6,
dadurch gekennzeichnet,
daß der Werkstoff Siliziumkarbid ist.

8. Rotationsteil nach einem der Ansprüche 1 bis 7,
dadurch gekennzeichnet,
daß in der Bohrung (4) des Rotationsteiles (1) ein einen kleineren Durchmesser aufweisendes Rohr (29) angeordnet ist, das sich durch den Kompensator (11) und die Gleitringdichtung erstreckt und mit einem in der Aufnahmehülse (30) vorgesehenen Zuführ-(31) bzw. Abfuhranschluß (32) für das Kühlmedium verbunden ist.

9. Rotationsteil nach einem der Ansprüche 1 bis 8,
dadurch gekennzeichnet,
daß im Bereich der sich überlappenden Erstreckung von Aufnahmehülse (16) und Distanzhülse (26,26') ein Dichtring (27) angeordnet ist.

10. Rotationsteil nach einem der Ansprüche 1 bis 9,
dadurch gekennzeichnet,
daß die Aufnahmehülse (16,30) außen auf der Mantelfläche mindestens eine die Mitdrehung verhindernde Abflachung aufweist.

## Claims

1. Rotational part, in particular support and transport roll, with a device for coupling a cooling guide, wherein the rotational part is mounted via pins in bearings and a coolant flows through it via a bore passing axially through the pins, wherein the pin is connected to a cooling duct which at one end can be joined to a coolant supply and discharge means, respectively, and at the other end opens out in the region of the pin bore, and a compensator is provided between the supply and discharge region of the coolant and the bore in the rotational part, which compensator is elastic and prevents movements between the pin and the stationary parts of the device, co-operates with a seal disposed in this intermediate region and whose end which faces the rotational part is non-rotatably connected to the pin of the rotational part,
characterised in that the end (12) of the compensator (11) which is remote from the rotational part (1) is non-rotatably connected to an axially acting slide ring (13) of a slide ring seal, and the stationary slide ring (14) of the slide ring seal is internally supported on a base-like projection of a receiving sleeve (16) which, while encompassing the compensator (11) and influencing the preloading of the latter, is detachably connected at a variable spacing (21) to a frame element (2) of the mounting of the rotational part (1).

2. Rotational part according to Claim 1,
characterised in that the receiving sleeve (16) comprises at the end which faces the rotational part (1) a collar (19) which extends radially outwards and co-operates with a cover-like flange (20) which in turn is connected via at least two screws (22, 22') to the frame element (2) of the mounting of the rotational part (1).

3. Rotational part according to Claim 2,
characterised in that the cover-like flange comprises a spectacle-like disc (25) which co-operates with distance sleeves (26, 26') encompassing the connecting screws (22, 22').

4. Rotational part according to Claims 1 to 3,
characterised in that the preloading of the compensator (11) can be adjusted via distance rings and distance sleeves (26, 26') of differing length.

5. Rotational part according to any one of Claims 1 to 4,
characterised in that the end (10) of the compensator (11) which faces the rotational part (1) is non-rotatably connected to a shouldered sleeve (7) which extends into the receiving sleeve (16) and which in turn is non-rotatably connected to the pin of the rotational part (1).

6. Rotational part according to any one of Claims 1 to 5,
characterised in that the slide rings (13, 14) of the slide ring seal are made of a hard and wear-resistant material.

7. Rotational part according to Claim 6,
characterised in that the material is silicon carbide.

8. Rotational part according to any one of Claims 1 to 7,
characterised in that a tube (29) of a smaller diameter is disposed in the bore (4) in the rotational part (1), which tube extends through the compensator (11) and the slide ring seal and is connected to a supply conection (31) and discharge connection (32), respectively, for the coolant.

9. Rotational part according to any one of Claims 1 to 8,
characterised in that a sealing ring (27) is disposed in the region of the overlapping extent of the receiving sleeve (16) and the distance sleeve (26, 26').

10. Rotational part according to any one of Claims 1 to 9,
characterised in that the receiving sleeve (16, 30) comprises at least one flattened portion, which prevents co-rotation, outside of the circumferential surface.

## Revendications

1. Pièce rotative, en particulier rouleau de transport et d'appui, comportant un dispositif pour l'accouplement d'un guide d'agent de refroidissement, la pièce rotative étant montée dans des paliers par l'intermédiaire de tourillons et étant traversée, par l'intermédiaire d'un perçage guidé axialement à travers les tourillons, par un agent de refroidissement, le tourillon étant relié à un canal de refroidissement, qui, à une extrémité, peut être raccordé à une amenée ou à une évacuation d'agent de refroidissement et, à l'autre extrémité, débouche dans la zone du perçage du tourillon et, entre la zone d'amenée ou d'évacuation de l'agent de refroidissement et le perçage de la pièce rotative, il est prévu un compensateur qui est élastique et empêche des déplacements entre le tourillon et les parties fixes du dispositif, et qui coopère avec un joint étanche agencé dans cette zone intermédiaire et dont l'extrémité en regard de la pièce rotative est reliée de façon solidaire en rotation au tourillon de la pièce rotative,
caractérisée en ce que l'extrémité (12), opposée à la pièce rotative (1), du compensateur (11) est reliée de façon solidaire en rotation à un anneau glissant (13), agissant axialement, d'un joint étanche à anneau glissant, et l'anneau glissant fixe (14) du joint étanche à anneau glissant s'appuie intérieurement sur une saillie, analogue à un fond, d'un manchon de réception (16) qui, entourant le compensateur (11) et influençant sa précontrainte, est relié de façon amovible, avec un écartement modifiable (21), à un élément de bâti (2) du montage de la pièce rotative (1).

2. Pièce rotative selon la revendication 1,
caractérisée en ce que le manchon de réception (16) présente, sur l'extrémité en regard de la pièce rotative (1), un rebord (19) s'étendant radialement vers l'extérieur, qui coopère avec une bride (20) du type couvercle, qui, à son tour, est reliée, par l'intermédiaire d'au moins deux vis (22, 22'), à l'élément de bâti (2) du montage de la pièce rotative (1).

3. Pièce rotative selon la revendication 2,
caractérisée en ce que la bride du type couvercle présente une plaque (25) du type lunette, qui coopère avec des manchons d'écartement (26, 26') entourant les vis de liaison (22, 22').

4. Pièce rotative selon les revendications 1 à 3,
caractérisée en ce que la précontrainte du compensateur (11) est réglable par l'intermédiaire de bagues d'écartement et de manchons d'écartement (26, 26') de différentes longueurs.

5. Pièce rotative selon une des revendications 1 à 4,
caractérisée en ce que l'extrémité (10), en regard de la pièce rotative (1), du compensateur (11) est reliée de façon solidaire en rotation à un manchon (7) s'étendant jusque dans le manchon de réception (16) qui, à son tour, est relié de façon solidaire en rotation au tourillon de la pièce rotative (1).

6. Pièce rotative selon une des revendications 1 à 5,
caractérisée en ce que les anneaux glissants (13, 14) du joint étanche à anneau glissant sont fabriqués en une matière dure et résistant à l'usure.

7. Pièce rotative selon la revendication 6,
caractérisée en ce que la matière est du carbure de silicium.

8. Pièce rotative selon une des revendications 1 à 7,
caractérisée en ce que, dans le perçage (4) de la pièce rotative (1), il est agencé un tube (29) présentant un diamètre plus petit, qui s'étend à travers le compensateur (11) et le joint étanche à anneau glissant et est relié à un raccord d'amenée (31) ou à un raccord d'évacuation (32), prévus dans le manchon de réception (30), pour l'agent de refroidissement.

9. Pièce rotative selon une des revendications 1 à 8,
caractérisée en ce que, dans la zone de l'extension se chevauchant du manchon de réception (16) et du manchon d'écartement (26, 26'), il est agencé une bague d'étanchéité (27).

10. Pièce rotative selon une des revendications 1 à 9,
caractérisée en ce que le manchon de réception (16, 30) présente, extérieurement, sur la surface d'enveloppe, au moins un méplat empêchant la rotation.
